Europäisches Patentamt

European Patent Office

Office européen des brevets

(11) Veröffentlichungsnummer : **0 050 825**
**B1**

# (12) EUROPÄISCHE PATENTSCHRIFT

(45) Veröffentlichungstag der Patentschrift :
18.09.85

(21) Anmeldenummer : 81108573.7

(22) Anmeldetag : 20.10.81

(51) Int. Cl.⁴ : **F 16 D 65/56, F 16 D 49/08**

(54) **Selbsttätige Nachstellvorrichtung für eine Aussenbandbremse.**

(30) Priorität : 24.10.80 US 200235

(43) Veröffentlichungstag der Anmeldung :
05.05.82 Patentblatt 82/18

(45) Bekanntmachung des Hinweises auf die Patenterteilung : 18.09.85 Patentblatt 85/38

(84) Benannte Vertragsstaaten :
DE FR GB IT SE

(56) Entgegenhaltungen :
DE-A- 1 951 685
DE-B- 2 438 755
GB-A- 1 555 906
US-A- 4 009 769

(73) Patentinhaber : DEERE & COMPANY
1 John Deere Road
Moline Illinois 61265 (US)

(72) Erfinder : Coleman, David LeRoy
2030 Lombard Street
Dubuque Iowa 52001 (US)
Erfinder : Kass, John Joseph
1320 Oeth Ct.
Dubuque Iowa 52001 (US)

(74) Vertreter : Lins, Edgar, Dipl.-Phys. et al
Patentanwälte Gramm + Lins Theo-
dor-Heuss-Strasse 2
D-3300 Braunschweig (DE)

**Beschreibung**

Die Erfindung betrifft eine selbsttätige Nachstellvorrichtung für eine Außenbandbremse, mit einem von einem Betätigungshebel beaufschlagten Kniehebel, der in einem gestellfesten Lager verschwenkbar angeordnet ist und über ein an einem ersten Bremsbandende angreifendes Gestänge, dessen Länge durch ein verschraubbares Klinkenrad verstellbar ist, die Bremsbandenden gegeneinander verspannt, wobei an dem einen Ende des Kniehebels eine Verbindungsstange angelenkt ist, deren anderes Ende mit dem Betätigungshebel gelenkig verbunden ist, während in der Mitte des Kniehebels eine Verbindung mit dem zweiten Bremsbandende, das gestellfeste Lager aber an dem anderen Kniehebelende bei Vorwärtsdrehung der Bremstrommel, jedoch bei deren Rückwärtsdrehung an der Kniehebelmittel vorgesehen sind, und ferner mit einem Klinkenhebel, der über eine federbelastete Klinke mit dem Klinkenrad in Eingriff steht und von dem Betätigungshebel beaufschlagt wird, wenn ein Gleitstück an das Ende einer das Sollüftspiel bestimmenden Aussparung anschlägt, wobei bei Bremsbetätigung und nach Überwindung des Sollüftspiels die Klinke in einen weiteren Zahn des Klinkenrades eingreift und letzteres beim Lösen der Bremse im Nachstellsinne verdreht.

Eine derartige Konstruktion läßt sich der deutschen Patentschrift 24 38 755 entnehmen. Hier ist der Betätigungshebel drehfest mit einer Eingangswelle verbunden, die von einer Rückholfeder beaufschlagt wird, die der in dem einen Drehsinn gerichteten Bewegung der Eingangswelle aus einer nicht betätigten Stellung in eine betätigte Stellung entgegenwirkt. Die den Kniehebel mit dem Betätigungshebel verbindende Verbindungsstange ist am Betätigungshebel über einen Bolzen angelenkt, der das genannte Gleitstück bildet und in einem Längsschlitz des Klinkenhebels schwimmend geführt ist. Zum Bremsen wird die genannte Eingangswelle von Hand oder auch über ein Pedal gedreht. Dabei liegt normalerweise das Bremsband bereits fest um die Bremstrommel, bevor der genannte Bolzen das untere Ende des genannten Langloches im Klinkenhebel erreicht hat. Bei Verschließ des Bremsbandes wandert der genannte Bolzen jedoch nach und nach gegen das Ende des Langloches und liegt schließlich gegen dieses an. Bei weiterem Verschleiß wirkt dann der Bolzen auf den Klinkenhebel ein und bewirkt in der oben beschriebenen Weise die Nachstellung des Klinkenrades.

Diese Konstruktion hat sich insgesamt bewährt, jedoch konnte die Art der Einleitung der Bremsbewegung durch Verdrehung der genannten Eingangswelle nicht voll befriedigen, da die Bewegungsübertragung zur Nachstellung des Klinkenrades nicht exakt genug erfolgte.

Der Erfindung liegt somit die Aufgabe zugrunde, die eingangs erläuterte Vorrichtung hinsichtlich der exakten und sicheren Wirkungsweise der Nachstelleinrichtung für das Klinkenrad zu verbessern.

Diese Aufgabe wird gemäß der Erfindung dadurch gelöst, daß zur Verschwenkung des Betätigungshebels ein Hydraulikzylinder vorgesehen ist, dessen in Längsrichtung verschiebbare Kolbenstange an dem einen Ende des Betätigungshebels angelenkt ist, dessen anderes Ende in einem gestellfesten Lager schwenkbar gelagert ist, so daß eine Verschiebung der Kolbenstange zu einer Verschwenkung des Kniehebels um seine mittlere Verbindung oder aber um sein Lager am anderen Kniehebelende führt.

Als Antrieb wird somit anstelle der vorbekannten Eingangswelle ein Hydraulikzylinder verwendet, dessen lineare Kolbenbewegung sich sehr genau steuern läßt. Dabei ist es vorteilhaft, wenn am Klinkenhebel eine Justierstange fest verbunden ist, deren anderes Ende von einem Steuergestänge zum Nachstellen des Klinkenrades beaufschlagt wird.

Das Steuergestänge kann aus einem Hebel bestehen, dessen eines Ende mit der Justierstange in Verbindung steht, während sein anderes Ende gestellfest gelagert ist und das Gleitstück trägt, das in die im Betätigungshebel angeordnete nutförmige Aussparung so eingreift, daß es dann, wenn die Kolbenstange eine bestimmte Wegstrecke überschreitet, gegen das Ende der Aussparung anschlägt und dann eine Verschwenkung des Hebels bewirkt, wodurch die Justierstange verschoben und somit der Klinkenhebel betätigt werden.

In der Zeichnung ist eine als Beispiel der Erfindung dienende Ausführungsform dargestellt. Es zeigen :

Figur 1 in Seitenansicht eine selbsttätige Nachstellvorrichtung für eine Außenbandbremse, wobei das Gehäuse unter Weglassung unwesentlicher Teile im Längsschnitt dargestellt ist ;

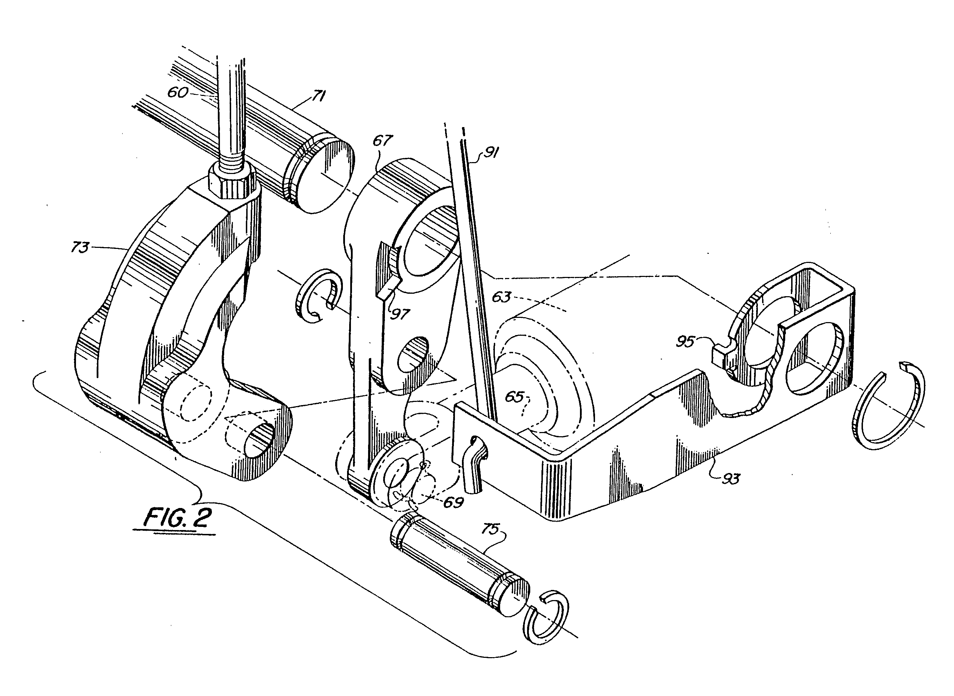

Figur 2 in vergrößertem Maßstab in Explosionsdarstellung einen Teil der Brems- und Nachstellvorrichtung und

Figur 3 in perspektivischer Darstellung die eigentliche Nachstellvorrichtung.

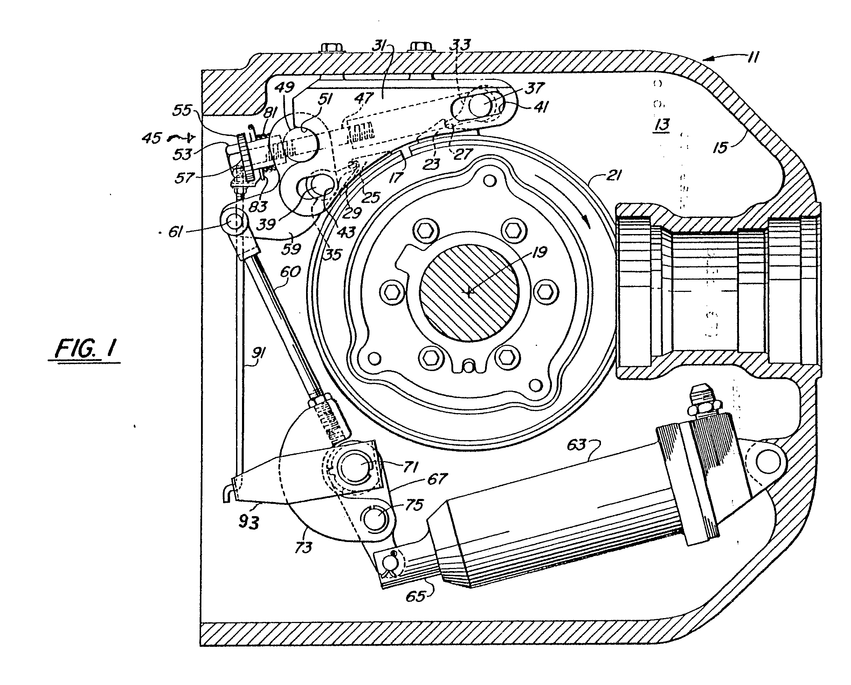

Die dargestellte Außenbandbremse 11 ist im Hohlraum 13 eines Gehäuses 15 angeordnet. Vorgesehen ist eine zylindrische Bremstrommel 17, die sich für Vorwärts- und Rückwärtsfahrt um eine Querachse 19 drehen kann. Die Drehrichtung für Vorwärtsfahrt entspricht dem Uhrzeigerdrehsinn und ist in Figur 1 mit einem Pfeil angedeutet. Der größte Teil der Bremstrommel 17 wird von einem Bremsband 21 mit Bremsbandenden 23, 25 umgeben. Letztere haben sich gegensätzlich öffnende Sitzflächen 27, 29. In Figur 1 ist das Bremsband 21 schematisch in seinem unbetätigten Zustand dargestellt, in dem es einen Abstand zur Bremstrommel 17 aufweist. Die Bremsbandenden 23, 25 sind zwischen den sich gegenüberliegenden Wandungen eines Gehäuseteils 31 angeordnet, das fest mit dem Gehäuse 15 verbunden ist und somit einen Bestandteil hiervon bildet. Keilstäbe 33, 35 greifen mit ihren abgerundeten Enden in die Sitzflächen 27, 29 der Bremsbandenden 23, 25 ein. Die beiden Keilstäbe 33, 35 sind schwenkbar auf ersten und zweiten Ankerzapfen 37, 39 gelagert. Aufeinander zugerichtete Langlöcher 41, 43 sind in den sich gegenüberliegenden Wandungen des genannten Gehäuseteils 31 eingearbeitet und nehmen die Ankerzapfen 37, 39 verschiebbar auf. Sie sind in Ebenen angeordnet, die an einer Stelle konvergieren, die radial außen von dem Bremsband und oberhalb der Stelle zwischen den beiden Bremsbandenden liegt.

Ein Betätigungsgestänge 45 für die Betätigung der Ankerzapfen 37, 39 und somit für die Betätigung des Bremsbandes 21 zum Bremsen der Bremstrommel besteht im einzelnen aus einer in seiner Länge einstellbaren Gestängeverbindung 47, die zwischen den sich gegenüberliegenden Wandungen des Gehäuseteils 31 angeordnet ist und ein gabelförmiges rechtes Ende aufweist, das schwenkbar mit dem ersten Ankerzapfen 37 verbunden ist. Das andere Ende der Gestängeverbindung 47 ist stangenartig ausgebildet und ist in einer Querbohrung eines dritten Ankerzapfens 49 verschiebbar geführt. Dieser dritte Ankerzapfen 49 ist parallel zu der Querachse 19 der Bremstrommel 17 angeordnet und in einer Stellung dargestellt, in der er gegen ein quer ausgerichtetes gestellfestes Lager 51 anliegt, das in das linke Ende der Wandungen des Gehäuseteils 31 eingearbeitet ist. Dieses Lager 51 ist radial außen von den beiden Langlöchern 41, 43 vorgesehen. Das linke Ende der Gestängeverbindung 47 ist zur Aufnahme eines Klinkenrades mit Gewinde versehen, Das Klinkenrad besteht im einzelnen aus einer einstellbaren Mutter 53, deren äußeres Ende die Form einer Scheibe 55 hat und in deren Peripherie eine Vielzahl von gleichen Abstand zueinander aufweisenden Zähnen 57 eingearbeitet ist. Ein Kniehebel 59 ist mit einem gabelförmigen rechten Ende versehen, das teilweise zwischen den sich gegenüberliegenden Wandungen des Gehäuseteils 31 liegt und den zweiten und dritten Ankerzapfen 39, 49 verschwenkbar aufnimmt. Der Kniehebel 59 ist somit schwimmend mit dem Gehäuseteil 31 verbunden. Eine Verbindungsstange 60 übergreift mit einem gabelförmigen oberen Ende das linke Ende des Kniehebels 59, mit dem es über einen Bolzen 61 schwenkbar verbunden ist.

In dem Gehäuse 15 ist ein Hydraulikzylinder 63 angelenkt, dessen Kolbenstange 55 ein gabelförmig ausgebildetes freies Ende aufweist, an dem ein Betätigungshebel 67 über einen Stift 69 verschwenkbar angelenkt ist. Das andere Ende des Betätigungshebels 67 ist verschwenkbar gelagert um einen gestellfesten, parallel zur Querachse 19 der Bremstrommel 17 angeordneten Stift 71. Etwa mittig zwischen dem Stift 69 und dem Zapfen 71 ist an dem Betätigungshebel 67 das gegabelte Ende eines Bremsbetätigungshebels 73 über einen Zapfen 75 angelenkt, während das andere Ende des Bremsbetätigungshebels 73 mit dem unteren Ende der genannten Verbindungsstange 60 verschraubt ist. Die Bremsbetätigung erfolgt somit durch Einziehen der Kolbenstange 65 in den Hydraulikzylinder 63. Diese Bewegung führt zu einer Verschwenkung des Bremsbetätigungshebels 73 und somit zu einer Verschiebung der Verbindungsstange 60, die den Kniehebel 59 beaufschlagt, der in dem Gehäuseteil 31 schwimmt, bis der dritte Ankerzapfen 49 am gestellfesten Lager 51 anliegt, wenn sich die Bremstrommel in der in Figur 1 eingezeichneten Richtung dreht. In diesem Fall bildet der dritte Ankerzapfen 49 einen Drehpunkt für den Kniehebel 59, der durch seine Verschwenkung ein Zusammenziehen der Bremsbandenden 23, 25 bewirkt. Wenn sich die Bremstrommel 17 in umgekehrter Richtung dreht, bildet der zweite Ankerzapfen 39 den Drehpunkt für den Kniehebel 59 gegenüber dem Gehäuseteil 31 ; der dritte Ankerzapfen 49, der an der einstellbaren Mutter 53 anliegt, löst sich dann von dem gestellfesten Lager 51 und verursacht so eine Längsverschiebung der Gestängeverbindung 47, wodurch wiederum eine Verspannung des Bremsbandes erfolgt.

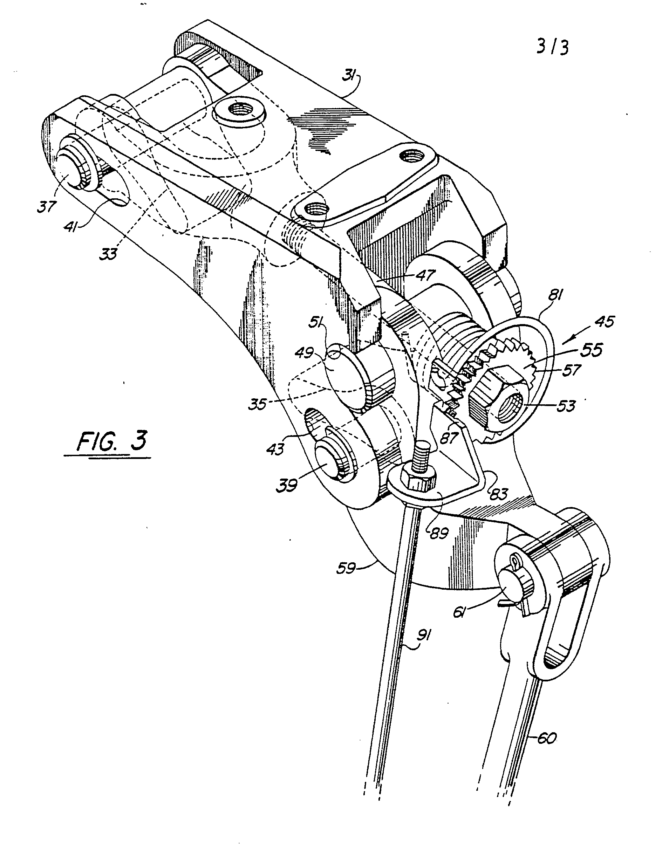

Figur 3 läßt Einzelheiten der selbständigen Nachstellvorrichtung erkennen. Zwischen dem dritten Ankerzapfen 49 und dem Klinkenrad 55 ist eine Biegefeder 91 so um die einstellbare Mutter 53 gewunden, daß das eine Federende gegen die Innenfläche des Kniehebels 59 in seinem gegabelten Bereich federnd anliegt, während das andere Federende an einem Klinkenhebel 83 eingehakt ist, der dadurch gegen die Mutter 53 gezogen wird, so daß eine Klinke 87 des Klinkenhebels 83 an einem der Zähne 57 des Klinkenrades anliegt. Eine Justierstange 91 ist mit ihrem oberen Ende mit dem Klinkenhebel 83 verschraubt und mit ihrem anderen Ende mit einem Hebel 93 verbunden, der ebenfalls auf dem gestellfesten Zapfen 71 verschwenkbar gelagert ist und mit einem Gleitstück 95 in eine nutförmige Aussparung 97 des Betätigungshebels 67 eingreift. Diese Aussparung 97 ist so dimensioniert, daß das Gleitstück 95 bei normalem Betrieb die Enden der Aussparung 97 nicht berührt. Vergrößert sich jedoch der für die Bremsbetätigung bekannte Verschiebeweg der Kolbenstange 65, beispielsweise infolge von Verschleiß des Bremsbandes, dann schlägt das Gleitstück 95 am Ende der Aussparung 97 an und führt zu einer Verschwenkung des Hebels 93 um den Zapfen 71. Der Hebel 93 zieht dadurch die Justierstange 91 nach unten, so daß dadurch die Klinke 87 den nächst unteren Zahn des Klinkenrades untergreift. Wird anschließend die Bremse wieder gelöst, so zieht die Biegefeder 81 den Klinkenhebel 83 wieder hoch, wobei dann die Klinke 87 die Mutter 53 nachstellt und so den Verschleiß des Bremsbandes kompensiert.

## Patentansprüche

1. Selbsttätige Nachstellvorrichtung für eine Außenbandbremse (11), mit einem von einem Betätigungshebel (67) beaufschlagten Kniehebel (59), der in einem gestellfesten Lager (31, 49, 51) verschwenkbar angeordnet ist und über ein an einem ersten Bremsbandende (23) angreifendes Gestänge (45), dessen Länge durch ein verschraubbares Klinkenrad (53, 55, 57) verstellbar ist, die Bremsbandenden (23, 25) gegeneinander verspannt, wobei an dem einen Ende des Kniehebels (59) eine Verbindungsstange (60) angelenkt ist, deren anderes Ende mit dem Betätigungshebel (67) gelenkig verbunden ist, während in der Mitte des Kniehebels (59) eine Verbindung (39) mit dem zweiten Bremsbandende (25), das gestellfeste Lager (31, 49, 51) aber an dem anderen Kniehebelende bei Vorwärtsdrehung der Bremstrommel (17), jedoch bei deren Rückwärtsdrehung an der Kniehebelmitte vorgesehen sind, und ferner mit einem Klinkenhebel (83), der über eine federbelastete Klinke (87) mit dem Klinkenrad (53, 55, 57) in Eingriff steht und von dem Betätigungshebel (67) beaufschlagt wird, wenn ein Gleitstück (95) an das Ende einer das Sollüftspiel bestimmenden Aussparung (97) anschlägt, wobei bei Bremsbetätigung und nach Überwindung des Sollüftspiels die Klinke (87) in einen weiteren Zahn (57) des Klinkenrades (53, 55, 57) eingreift und letzteres beim Lösen der Bremse im Nachstellsinne verdreht, dadurch gekennzeichnet, daß zur Verschwenkung des Betätigungshebels (67) ein Hydraulikzylinder (63) vorgesehen ist, dessen in Längsrichtung verschiebbare Kolbenstange (65) an dem einen Ende des Betätigungshebels (67) angelenkt ist, dessen anderes Ende in einem gestellfesten Lager (71) schwenkbar gelagert ist, so daß eine Verschiebung der Kolbenstange (65) zu einer Verschwenkung des Kniehebels (59) um seine mittlere Verbindung (39) oder aber um sein Lager (49) am anderen Kniehebelende führt.

2. Vorrichtung nach Anspruch 1, dadurch gekennzeichnet, daß am Klinkenhebel (83) eine Justierstange (91) fest verbunden ist, deren anderes Ende von einem Steuergestänge (67, 93, 95, 97) zum Nachstellen des Klinkenrades (53, 55, 57) beaufschlagt wird.

3. Vorrichtung nach Anspruch 2, dadurch gekennzeichnet, daß das Steuergestänge aus einem Hebel (93) besteht, dessen eines Ende mit der Justierstange (91) in Verbindung steht, während sein anderes Ende gestellfest gelagert (71) ist und das Gleitstück (95), trägt, das in die im Betätigungshebel (67) angeordnete nutförmige Aussparung (97) so eingreift, daß es dann, wenn die Kolbenstange (65) eine bestimmte Wegstrecke überschreitet, gegen das Ende der Aussparung (97) anschlägt und dann eine Verschwenkung des Hebels (93) bewirkt, wodurch die Justierstange (91) verschoben und somit der Klinkenhebel (83) betätigt werden.

## Claims

1. Self-adjusting device for an external bank brake (11) comprising : a bell crank (59) actuated by an actuating lever (67) and pivotally mounted in a fixed mounting member (31, 49, 51), said bell crank (59) urging — via a linkage (45) which engages a first brake band end (23) and which has a length being adjustable by a rotatable ratchet wheel (53, 55, 57) — the brake band ends (23, 25) against each other, and having one end portion pivoted to a connecting rod (60), the other end portion pivoted to said actuating lever (67) and its middle portion provided with a connection (39) with the second brake band end (25), whereas said fixed mounting member (31, 49, 51) is provided on the other bell crank end portion when the brake drum (17) rotates in forward direction, but when the brake drum (17) rotates in reverse direction, the fixed mounting member (31, 49, 51) is provided in the middle portion of the bell crank ; further comprising a ratchet lever (83) engaging via a spring-biased ratchet (87) said ratchet wheel (53, 55, 57) and being actuated by said actuating lever (67), when a rider (95) contacts the end wall of a recess (97) determining the nominal clearance in released condition, whereby, the brake being actuated and after compensating said clearance in released position, said ratchet (87) engages the next tooth (57) of the ratchet wheel (53, 55, 57) and rotates the ratchet wheel for adjusting purposes, when the brake is released, characterized in that for pivotal movement of the actuating lever (67) a hydraulic cylinder (63) is provided having a longitudinally movable piston rod (65) pivoted to one end portion of the actuating lever (67), the other end portion of said actuating lever (67) being pivotally mounted in a fixed mounting member (71), so that movement of the piston rod (65) causes said bell crank (59) to pivot around its middle portion connection (39) or around its mounting member (49) on the other bell crank end portion.

2. Device according to claim 1, wherein an adjusting rod (91) is fixably mounted to the ratchet lever (83), the other end portion of said adjusting rod being actuated by a control linkage (67, 93, 95, 97) for adjusting the ratchet wheel (53, 55, 57).

3. Device according to claim 2, wherein said control linkage comprises a lever (93), one end of this lever communicating with said adjusting rod (91), the other end being pivotally mounted to the frame (71) and comprising said rider (95) which engages said recess (97) having the shape of a groove and being arranged in said actuating lever (67) in such way that, when the piston rod (65) exceeds a predetermined distance, the rider contacts said end wall of the recess (97) and thereby causes the lever (93) to pivot, causing the adjusting rod (91) to be moved, resulting in the ratchet lever (83) to be operated.

## Revendications

1. Dispositif de réglage automatique pour frein à ruban extérieur (11) comprenant un levier coudé (59) sur lequel agit un levier d'actionnement (67), qui est monté de façon pivotante dans un palier fixe (31, 49, 51) prévu sur le bâti et qui déplace l'une par rapport à l'autre les extrémités (23, 25) du ruban de frein par l'intermédiaire d'une tringlerie (45) attaquant une première extrémité (23) de ce ruban de frein et dont la longueur est réglable au moyen d'une roue à rochet (53, 55, 57) pouvant être déplacée par vissage, une biellette de liaison (60) étant articulée à une extrémité du levier coudé (59), l'autre extrémité de cette biellette étant reliée à articulation au levier d'actionnement (67), tandis qu'il est prévu, au milieu du levier coudé (59), une liaison (39) avec la seconde extrémité (25) du ruban de frein, le palier fixe (31, 49, 51) étant prévu à l'autre extrémité du levier coudé lors de la rotation vers l'avant du tambour de frein (17), mais le pivotement s'effectuant au milieu de ce levier coudé lors de la rotation en marche arrière, et comprenant en outre un levier à cliquet (83), qui est prise par l'intermédiaire d'un cliquet (87) soumis à l'action d'un ressort avec la roue à rochet (53, 55, 57) et qui est soumis à l'action du levier d'actionnement (67) quand un ergot formant coulisseau (95) vient buter contre l'extrémité d'un évidement (97) déterminant une course à vide ou un jeu nominal, le cliquet (87) s'engageant, lors de l'actionnement du frein et après avoir couvert ce jeu nominal, dans une autre dent (57) de la roue à rochet (53, 55, 57) et faisant tourner celle-ci dans le sens assurant un rattrapage de jeu lors du desserrage du frein, caractérisé en ce qu'il est prévu, pour assurer le pivotement du levier d'actionnement (67), un cylindre hydraulique (63) dont la tige de piston (65) pouvant coulisser dans le sens longitudinal est articulée à une extrémité du levier d'actionnement (67), dont l'autre extrémité est montée de façon pivotante dans un palier fixe (71), de sorte qu'un coulissement de la tige de piston (65) provoque un pivotement du levier coudé (59) autour de sa liaison médiane (39) ou bien autour de son palier (49) prévu à l'autre extrémité de ce levier coudé.

2. Dispositif suivant la revendication 1, caractérisé en ce qu'une tringle de réglage (91) est reliée rigidement au levier à cliquet (83), l'autre extrémité étant soumise à l'action d'une tringlerie de commande (67, 93, 95, 97) pour le déplacement de la roue à rochet (53, 55, 57) en vue du réglage ou rattrapage de jeu du frein.

3. Dispositif suivant la revendication 2, caractérisé en ce que la tringlerie de commande est constituée par un levier (93) dont une extrémité est reliée à la tringle de réglage (91), tandis que son autre extrémité est tourillonnée en un point fixe (71) et porte l'ergot (95) qui s'engage dans l'évidement en forme de rainure (97) ménagé dans le levier d'actionnement (67), de façon telle que, lorsque la tige de piston (65) dépasse une course déterminée, cet ergot vienne buter contre l'extrémité de l'évidement (97) et provoque alors un basculement du levier (93), de sorte que la tringle de ·réglage (91) est déplacée, ce qui actionne ainsi le levier à cliquet (83).

FIG. 1

0 050 825

*FIG.2*

FIG. 3